# EUROPEAN PATENT APPLICATION

(11) **EP 4 661 234 A1**
(43) Date of publication of application: **10.12.2025**
(21) Application number: 25711402.5
(22) Date of filing: 20.01.2025
(51) Int. Cl.: H02J 3/14, G06Q 50/06, H02J 13/00

(54) **CONTROL SYSTEM, CONTROL DEVICE, AND CONTROL METHOD**

(30) Priority: 26.04.2024 JP 2024072988
(71) Applicant: Daikin Industries, Ltd., Osaka-shi, Osaka 530-0001 (JP)
(72) Inventor: TANIGAWA, Saeko, Osaka-shi, Osaka 530-0001 (JP); GAMO, Satoshi, Osaka.shi, Osaka 530-0001 (JP)
(74) Representative: Hoffmann Eitle
(86) International application number: PCT/JP2025/001520
(87) International publication number: WO 2025/225101

(57) **Abstract**

A cost for wiring a control device and a power reception system is reduced, and information for a demand control is acquired even in a case where the wiring itself is difficult.

The present disclosure relates to a control system including a first control device 10-1 configured to communicate with a power reception system 9 via a cable, and one or more second control devices 10-2 coupled to a device 30 that consumes electric power, wherein the first control device includes a first control unit, the first control unit acquires power consumption information of the device from the power reception system, and the first control unit transmits the power consumption information or information based on the power consumption information to the one or more second control devices.

## Description

### TECHNICAL FIELD

The present invention relates to control systems, control devices, and control methods.

### BACKGROUND ART

A demand control, which monitors an amount of power consumption of industrial facilities, such as factories or the like, and reduces the power consumption in a case where an increase in the amount of power consumption is predicted, is known. A device that performs the demand control periodically computes the amount of power consumption, and reduces the power consumption of a device so as not to exceed a set target amount of power consumption.

A technology, which performs the demand control by a single server with respect to power consumption at a plurality of sites, is known (refer to Patent Document 1, for example). Patent Document 1 discloses a management server that monitors received power at an integrated power receiving point, determines output adjustment amounts of the plurality of sites so that the received power is reduced from baseline power by a demand reduction power, and distributes the output adjustment amounts to the plurality of sites.

### PRIOR ART DOCUMENTS

### PATENT DOCUMENTS

Patent Document 1: Japanese Laid-Open Patent Publication No. 2020-156132

### DISCLOSURE OF THE INVENTION

### PROBLEM TO BE SOLVED BY THE INVENTION

However, in a case where a power reception system is provided on a utility pole, for example, the power reception system and each control device are far from each other, and underground wiring may be required in some cases, thereby increasing a cost of installation work. In addition, in a case where the power reception system is common to an upbound service area and a downbound service area of a highway, for example, the wiring must cross the elevated highway, and thus, the wiring itself may not be possible in some cases.

The present disclosure provides a technique for reducing a cost of wiring a control device and a power reception system, and for acquiring information for the control device to perform a demand control even in a case where the wiring itself is difficult.

### MEANS OF SOLVING THE PROBLEM

A first aspect of the present disclosure relates to a control system comprising a first control device configured to communicate with a power reception system via a cable, and one or more second control devices coupled to a device that consumes electric power, wherein:
the first control device includes a first control unit,
the first control unit acquires power consumption information of the device from the power reception system, and
the first control unit transmits the power consumption information or information based on the power consumption information to the one or more second control devices.

According to the first aspect of the present disclosure, it is possible to reduce a cost for wiring the control device and the power reception system, and to acquire information for a demand control even in a case where the wiring itself is difficult.

A second aspect of the present disclosure relates to the control system according to the first aspect, wherein the first control unit
determines a demand level, a difference between demand levels, or a margin with respect to a target amount of power consumption based on the power consumption information, and
transmits the demand level, the difference between the demand levels, or the margin with respect to the target amount of power consumption to the one or more second control devices, as the information based on the power consumption information.

A third aspect of the present disclosure relates to the control system according to the first aspect, wherein
the first control unit transmits the power consumption information to the one or more second control devices,
the one or more second control devices include a second control unit, and
the second control unit determines a demand level, a difference between demand levels, or a margin with respect to a target amount of power consumption of the second control unit based on the power consumption information.

A fourth aspect of the present disclosure relates to the control system according to the first or second aspect, wherein
the one or more second control devices include a second control unit, and
the second control unit, in a case where a communication with the first control device is interrupted, determines a demand level of the power supply, a difference between demand levels, or a margin with respect to a target amount of power consumption of the second control unit based on information acquired before the communication interrupted or information acquirable after the communication is interrupted.

A fifth aspect of the present disclosure relates to the control system according to the first aspect, wherein
the control system includes a server device, and
the first control unit transmits the power consumption information or the information based on the power consumption information to the one or more second control devices via the server device.

A sixth aspect of the present disclosure relates to the control system according to the fifth aspect, wherein
the server device includes a third control unit, and
the third control unit
   determines the second control device belonging to the same control group as the first control device that transmitted the power consumption information or the information based on the power consumption information, based on information related to a control device registered in advance in the server device, and
   transmits the power consumption information or the information based on the power consumption information to the second control device belonging to the same control group as the first control device.

A seventh aspect of the present disclosure relates to the control system according to the fifth aspect, wherein
the first control unit determines the second control device belonging to the same control group as the first control device, based on information related to a control device registered in advance in the first control device, and
the first control unit, when transmitting the power consumption information or the information based on the power consumption information to the server device, instructs the server device of the second control device belonging to the same control group as the first control device, as a transmission destination of the power consumption information or the information based on the power consumption information.

An eighth aspect of the present disclosure relates to the control system according to any one of the fifth to seventh aspects, wherein
the second control unit, in a case where a communication with the server device is interrupted, determines a demand level, a difference between demand levels, or a margin with respect to a target amount of power consumption of the second control unit based on information acquired before communication is interrupted or information acquirable after the communication is interrupted.

A ninth aspect of the present disclosure relates to the control system according to the eighth aspect, wherein the second control unit
determines, in a case where a communication with the server device is interrupted, whether or not a demand control is required, based on information acquired before the communication is interrupted or information acquirable after the communication is interrupted, and
determines, in a case where the demand control is determined as being required, a demand level, a difference between demand levels, or a margin with respect to a target amount of power consumption of the second control unit based on the information acquired before the communication is interrupted or the information acquirable after the communication is interrupted.

A tenth aspect of the present disclosure relates to the control system according to any one of the fifth to seventh aspects, wherein
the one or more second control devices include a second control unit, and
the second control unit performs a demand control at a maximum demand level, in a case where a communication with the server device is determined as being disconnected.

An eleventh aspect of the disclosure relates to a control device configured to communicate with a power reception system via a cable, comprising:
a first control unit, wherein
the first control unit is configured to communicate with one or more second control devices coupled to a device that consumes electric power,
the first control unit acquires power consumption information of the device from the power reception system, and
the first control unit transmits the power consumption information or information based on the power consumption information to the one or more second control devices.

According to the eleventh aspect of the present disclosure, it is possible to reduce the cost for wiring the control device and the power reception system, and to acquire the information for the demand control even in the case where the wiring itself is difficult.

A twelfth aspect of the disclosure relates to a control method to be implemented by a control system including a first control device configured to communicate with a power reception system via a cable, and one or more second control devices coupled to a device that consumes electric power, the control method comprising:
a process of acquiring, by a first control unit included in the first control device, power consumption information of the device from the power reception system; and
a process of transmitting, by the first control unit, the power consumption information or information based on the power consumption information to the one or more second control devices.

According to the twelfth aspect of the present disclosure, it is possible to reduce the cost for wiring the control device and the power reception system, and to acquire the information for the demand control even in the case where the wiring itself is difficult.

### BRIEF DESCRIPTION OF THE DRAWINGS

[FIG. 1] FIG. 1 is a diagram illustrating a comparative example of a configuration in which power consumption information is shared by edge devices 10-1 and 10-2.
[FIG. 2A] FIG. 2A illustrates an example of a schematic configuration diagram of a control system.
[FIG. 2B] FIG. 2B illustrates an example of a schematic configuration diagram of the control system.
[FIG. 3] FIG. 3 illustrates an example of a system configuration diagram of a control system according to an embodiment.
[FIG. 4] FIG. 4 is a diagram illustrating an example of a hardware configuration of an edge device.
[FIG. 5] FIG. 5 is a diagram illustrating an example of a hardware configuration of a cloud server.
[FIG. 6] FIG. 6 illustrates an example of a functional block diagram for explaining functions of the edge device 10-1, the edge device 10-2, and the cloud server of the control system divided into blocks.
[FIG. 7] FIG. 7 is a diagram illustrating an example of a destination determination table stored in a storage unit.
[FIG. 8] FIG. 8 illustrates an example of a functional block diagram for explaining functions of a demand control unit in detail.
[FIG. 9A] FIG. 9A is a diagram illustrating an example of a target power consumption management table stored in the storage unit.
[FIG. 9B] FIG. 9B is a diagram illustrating an example of a demand level table stored in the storage unit.
[FIG. 10] FIG. 10 is a diagram for schematically explaining a process of determining whether or not power consumption information is likely to exceed a target amount of power consumption.
[FIG. 11] FIG. 11 illustrates an example of a flow chart for explaining a method of determining a demand level.
[FIG. 12] FIG. 12 illustrates an example of a sequence diagram for explaining a process in which the edge device 10-1 transmits a demand level to the edge devices 10-2 and 10-3 via the cloud server.
[FIG. 13] FIG. 13 illustrates an example of a flow chart for explaining a process of estimating the demand level by the edge device.
[FIG. 14] FIG. 14 is a diagram for explaining a demand level estimation model.
[FIG. 15] FIG. 15 illustrates an example of a sequence diagram for explaining a process in which the edge device 10-1 transmits power consumption information to the cloud server and the cloud server transmits the demand level to the edge devices 10-1 to 10-3.
[FIG. 16] FIG. 16 is a diagram illustrating a modification of the system configuration of the control system.
[FIG. 17] FIG. 17 illustrates an example of a functional block diagram for explaining functions of the edge device 10-1 and the edge device 10-2 of the control system divided into blocks.
[FIG. 18] FIG. 18 is a diagram illustrating an example of an edge device management table registered in advance in the storage unit.
[FIG. 19] FIG. 19 illustrates an example of a sequence diagram for explaining a process in which the edge device 10-1 transmits a demand level to the edge devices 10-2 and 10-3 without intervention of the cloud server.
[FIG. 20] FIG. 20 is an example of a sequence diagram for explaining a process in which each edge device determines the demand level.
[FIG. 21] FIG. 21 illustrates an example of a schematic configuration diagram of the control system.

### MODE OF CARRYING OUT THE INVENTION

Hereinafter, a control system and a control method implemented by the control system will be described as an example of carrying out embodiments of the present invention.

### <Comparative Example of Configuration in which Power Consumption Information is Shared by Edge Device 10-1 and Edge Device 10-2>

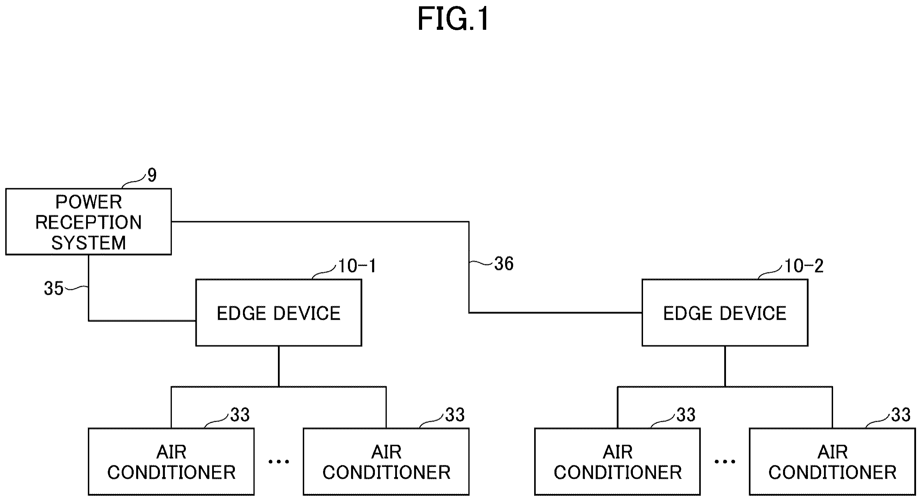

FIG. 1 illustrates a comparative example of a configuration in which the edge device 10-1 and the edge device 10-2 share power consumption information. The comparative example is an example for assisting understanding features of the present embodiment, and is not necessarily a conventional technique. The edge device 10-1 and the edge device 10-2 are connected to the power reception system 9 via cables 35 and 36, respectively. The power reception system 9 transmits power consumption information related to power consumed in a facility to the edge devices 10-1 and 10-2. One or more air conditioners 33 are connected to each of the edge devices 10-1 and 10-2, and the edge devices 10-1 and 10-2 perform a demand control of the air conditioners 33 according to the power consumption information. The demand control refers to a control for reducing the power consumption.

As described above, when a plurality of edge devices 10-1 and 10-2 are present, the power reception system 9 transmits the power consumption information with respect to each edge device of the plurality of edge devices 10-1 and 10-2. For this reason, the cables are required to connect the edge devices 10-1 and 10-2 to the power reception system 9.

Because the cable is required between each edge device and the power reception system 9, a cost of wiring increases according to a length of the wiring, and further, installation work for routing the wiring is required when installing the air conditioners 33. Moreover, because the edge devices 10-1 and 10-2 receive the power consumption information, each of the edge devices 10-1 and 10-2 performs the demand control according to the power consumption information.

### <System Configuration Example of Embodiment>

Accordingly, in the following embodiment, only the edge device 10-1 is connected to the power reception system 9 via a cable, and the edge device 10-1 transmits the power consumption information or information based on the power consumption information to one or more other edge devices 10-2. The information based on the power consumption information refers to information related to at least one of a demand level, a difference between the demand levels, and a margin with respect to a target amount of power consumption. Details of such information will be described later.

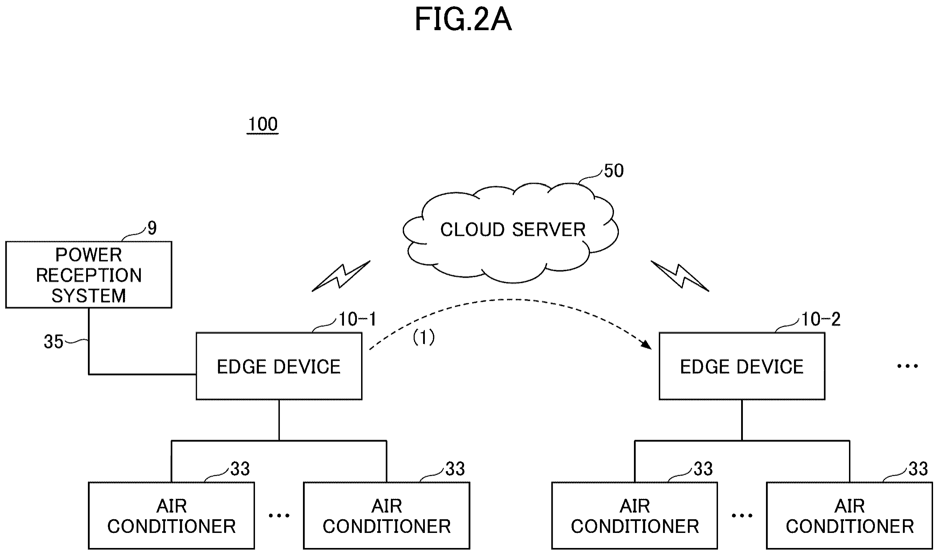

FIG. 2A illustrates a schematic configuration diagram of a control system 100 according to the present embodiment. As illustrated in FIG. 2A, the power reception system 9 and the edge device 10-1 (an example of a first control device) are connected via the cable 35, but the edge device 10-2 (an example of a second control device) and the power reception system 9 are not connected via a cable. On the other hand, the control system 100 newly includes a cloud server 50. The cloud server 50 and the edge device 10-1 can communicate via a (wired or wireless) network. In the configuration illustrated in FIG. 2A, the edge devices 10-1 and 10-2 can share the power consumption information or the information based on the power consumption information in the following manner.
(1) The edge device 10-1 transmits the power consumption information or the information based on the power consumption information received from the power reception system 9 to the cloud server 50, and the cloud server 50 transmits the power consumption information or the information based on the power consumption information to the edge device 10-2.

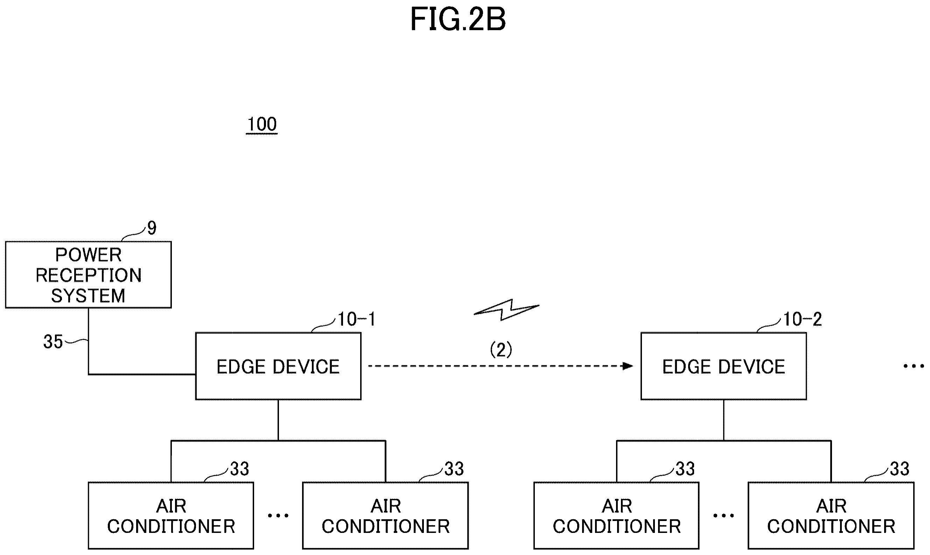

FIG. 2B similarly illustrates a schematic configuration diagram of the control system 100 according to the present embodiment. In FIG. 2B, the control system 100 does not include the cloud server 50, but the edge devices 10-1 and 10-2 can communicate via wireless communication. In the configuration illustrated in FIG. 2B, the edge devices 10-1 and 10-2 can share the power consumption information or the information based on the power consumption information in the following manner.

(2) The edge device 10-1 transmits the power consumption information or the information based on the power consumption information received from the power reception system 9 to the edge device 10-2 by wireless communication, without using the cloud server 50.

In both of the cases illustrated in FIG. 2A and FIG. 2B, in a case where the edge device 10-1 transmits the power consumption information itself to the edge device 10-2, the edge device 10-2 determines the demand level according to the power consumption information and performs the demand control.

As described above, the edge device 10-1 of the present embodiment is connected to the power reception system 9 via the cable, and thus, a likelihood of the communication being interrupted is low. Moreover, in a case where the edge device 10-1 transmits the demand level or a difference between demand levels to one or more other edge devices 10-2 or the like, the edge device 10-2 does not need to determine the demand level. Hence, the edge device 10-1 can cause the edge device 10-2 to share the same demand level. Alternatively, the edge device 10-1 may cause the edge device 10-2 to share a different demand level.

Hereinafter, the system configuration of FIG. 2A will be described in detail in a first embodiment, and the system configuration of FIG. 2B will be described in detail in a second embodiment.

### <Terms>

The information based on the power consumption information may be information that enables the edge devices 10-1 and 10-2 to perform the demand control. In the present embodiment, the information based on the power consumption information is at least one of the demand level, the difference between the demand levels, and a margin with respect to the target amount of power consumption. The demand level is a blocking level at which a capacity of the air conditioner or the like is blocked so as not to exceed the target amount (upper limit value) of power consumption. The larger the demand level, the larger the blocking level becomes, and the power consumption can be greatly reduced. The difference between the demand levels is a difference between a current demand level and a newly determined demand level, and refers to an amount of change in the demand level. The margin with respect to the target amount of power consumption is "(target amount of power consumption - current amount of power consumption) /target amount of power consumption amount", for example, and indicates how much leeway there is with respect to the target amount of power consumption.

The first control device is a device that communicates with the power reception system 9 via the cable, and the second control device is a control device connected to the air conditioner 33 or the like that consumes electric power. The first control device may or may not be connected to the air conditioner 33 or the like. A plurality of second control devices may be provided. The control by the control device refers to performing the demand control and a control of the air conditioner 33 or the like.

### [First Embodiment]

In the present embodiment, the control system 100 in which the edge devices 10-1 and 10-2 communicate via the cloud server 50 will be described.

### <System Configuration of Control System>

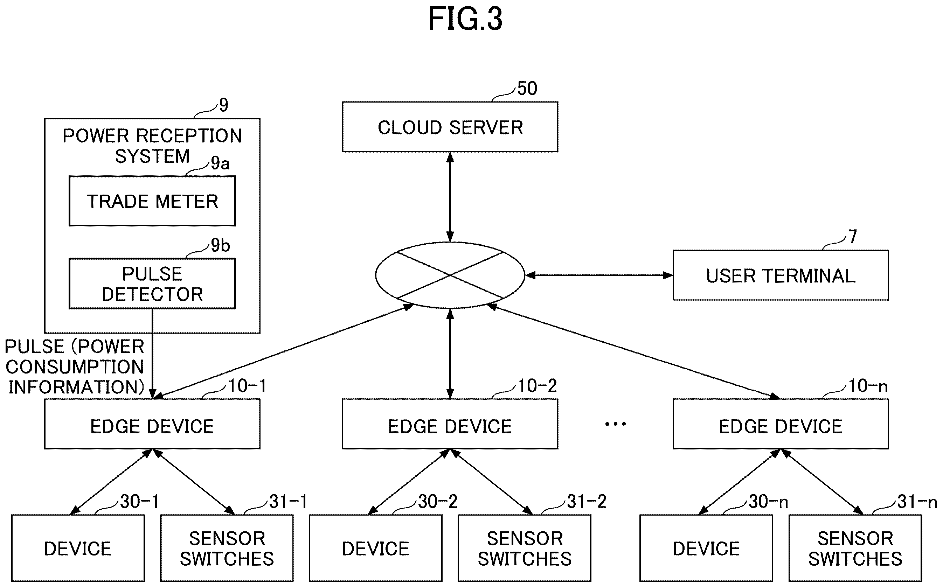

The system configuration of the control system 100 will be described with reference to FIG. 3. FIG. 3 is a system configuration diagram of the control system 100 according to the present embodiment.

The control system 100 provides various services utilizing the IoT from an administrator to a general user, by causing various devices 30, such as air conditioners, lighting devices, or the like to communicate with the cloud server 50 via the edge devices 10-1 to 10-n. For example, the edge devices 10-1 to 10-n, the devices 30-1 to 30-n, the sensor switches 31-1 to 31-n, and the user terminal 7 are arranged on a customer side, and the cloud server 50 is arranged in a cloud, such as a data center, the Internet, or the like. In the following description, an arbitrary edge device among the edge devices 10-1 to 10-n is referred to as an "edge device 10", an arbitrary device among the devices 30-1 to 30-n is referred to as a "device 30", and arbitrary sensor switches among the sensor switches 31-1 to 31-n are referred to as "sensor switches 31".

The device 30 refers to all devices that consume power, and includes the air conditioner 33, a security facility, a heat source device, a fire alarm, an air handling unit (AHU), an electricity meter, a lighting device, or the like, for example. The sensor switches 31 include various sensors, lamps, relays, or the like. The device 30 and the sensor switches 31 can connected for communication with the edge device 10 via a dedicated cable or a network, such as a LAN or the like. The device 30 and the sensor switches 31 can be connected for communication with to the edge device 10 via wireless communication.

The device 30 and the sensor switches 31 are controlled by the edge device 10. In other words, the edge device 10 performs a required operation on the device 30 and the sensor switches 31 so as to meet the purpose of the device 30 and the sensor switches 31. Contents of the control vary depending on the type of the device 30 and the sensor switches 31, and in a case where the device 30 is the air conditioner 33, for example, the control may include all controls related to the functions of the air conditioner 33, such as a cooling and heating mode, a set temperature, an airflow, a humidity, an airflow direction, or the like that can generally be set in the air conditioner 33. In addition, the control also includes a demand control or the like for reducing a power consumption so as not to exceed a target power consumption.

The device 30 collects operation data according to the device 30, and periodically transmits the operation data to the edge device 10. The term periodically refers to once per 1 minute, once per 10 minutes, once per 60 minutes, or the like, and the user terminal 7 or the cloud server 50 may be able to make the set the period. In addition, the device 30 can transmit the operation data to the edge device 10 in response to a request from the edge device 10 or the user terminal 7. The operation data varies depending on the device 30, and in the case of the air conditioner 33, for example, the operation data includes various parameters, such as a high pressure and a low pressure of a refrigerant, a refrigerant temperature, a number of revolutions of a fan, a CPU temperature of a microcomputer, or the like.

Moreover, in a case where the device 30 detects an abnormality, the device 30 transmits an abnormality code to the edge device 10. The device 30 that detected the abnormality stops operating. The edge device 10 transmits the abnormality code to the cloud server 50. The processes of the edge device 10 may be the same for the sensor switches 31. The sensor switches 31 mainly periodically transmit information thereof to the edge device 10, and transmit the abnormality code to the edge device 10.

The edge device 10 is a controller that controls the device 30 and the sensor switches 31. The edge device 10 includes functions of a control device that controls the devices 30 and the sensor switches 31 (the demand control is one of the controls), an information processing apparatus that processes operation data or the like, and a communication device that communicates with the cloud server 50. The edge device 10 transmits the operation data and the abnormality code received from the device 30 to the cloud server 50, for example, and receives from the cloud server 50 an instruction according to the operation data and the abnormality code. Alternatively, the edge device 10 may receive an instruction from the cloud server 50 without transmitting any information to the cloud server 50 (for example, in a case where there is an instruction from the user terminal 7 to the cloud server 50). The edge device 10 converts the instruction into an appropriate instruction according to models of the device 30 and the sensor switches 31, and transmits the instruction to the device 30 and the sensor switches 31.

The cloud server 50 is composed of one or more information processing apparatuses. Although one cloud server 50 is illustrated in FIG. 3, the cloud server 50 may be divided into several servers for each function. The functions of the cloud server 50 may be integrated into one information processing apparatus. Further, a plurality of cloud servers 50 having the same functions may be prepared, and the plurality of cloud servers 50 may perform processes while communicating with one another like a server cluster.

The cloud server 50 of the present embodiment receives from the edge device 10-1 the power consumption information or the information based on the power consumption information, which is received by the edge device 10-1 from the power reception system 9, and causes the edge devices 10-2 to 10-n to share the power consumption information or the information based on the power consumption information. In addition, the cloud server 50 receives the operation data, the abnormality code, or the like transmitted from the edge device 10 via the network N, and generates a required instruction. For example, in response to the abnormality code, the cloud server 50 instructs the edge device 10 to perform an emergency operation regardless of the model of the device 30. Further, the cloud server 50 may transmit to the edge device 10 an instruction to the device 30 according to a schedule or an operation set by the user terminal 7.

The cloud server 50 may include functions of a web server. In response to a request from client software (a Web client), such as a Web browser or the like operated manually by the user, the Web server provides screen information described in a HTML file, an XML, a CSS file, JavaScript (registered trademark), or the like to the client. An application that uses a mechanism of the Web in this manner is referred to as a Web application.

The cloud of the cloud server 50 is derived from cloud computing, and refers to a usage pattern in which a network resource is used without being aware of a specific hardware resource. However, the cloud server 50 of the present embodiment may be a conventional server device configured as a standalone unit or deployed on-premises.

The user terminal 7 is a client terminal that displays various screens provided by the cloud server 50. The user terminal 7 may be used by the administrator or the general user. The administrator includes an administrator on the customer side and an administrator on the control system side, but the two are not distinguished from each other in the present disclosure. In addition, the administrator is a person who performs maintenance and management that are not performed by the general user who uses the device 30 on a daily basis.

The various screens are displayed by the user terminal 7, and examples of the various screens include a list screen of the device 30 and the sensor switches 31 connected to the edge device 10 on the customer side, an in-house map indicating locations where the device 30 and the sensor switches 31 are disposed, an operation screen for operating the device 30 and the sensor switches 31, or the like.

The user terminal 7 is a personal computer (PC), a smartphone, a tablet terminal, a personal digital assistant (PDA), a wearable PC (a sunglasses type, a wristwatch type, or the like), or the like. However, the user terminal 7 need only include a communication function such that the Web browser can operate. In addition, a native application dedicated to the control system 100 may operate in the user terminal 7 instead of the web browser.

The power reception system 9 is installed in a facility that requires a relatively large amount of electric power, and supplies the facility with electricity suitable for a building or a factory that adjusts and uses a voltage. It is assumed that the power reception system 9 has an existing configuration. The power reception system 9 may be referred to as a cubicle, an electrical room, or the like. The power reception system 9 transforms the electricity of 6600 [V] transmitted from a power plant into the electricity of 100 [V] or 200 [V] that can be used in the facility. Accordingly, the power reception system 9 also includes functions of a transformer.

The power reception system 9 includes a trade meter 9a, and the trade meter 9a captures a voltage and a current transformed by a voltage and current transformer for power demand and supply metering (VCT), and detects the electric power used in the facility. The trade meter 9a is mainly installed by the electric power company at the customer.

A pulse detector 9b outputs a pulse according to the electric power detected by the trade meter 9a. The pulse detector 9b outputs one pulse when a certain amount of electric power is consumed, and outputs one pulse for every 1 kW-hour, for example. The power reception system 9 transmits the pulse to the edge device 10-1. The edge device 10-1 generates the power consumption information by counting the number of pulses for every period of time (for example, 30 seconds to 1 minute, or the like) shorter than the demand time (for example, 30 minutes). The power reception system 9 may transmit the number of pulses accumulated during the period of time shorter than the demand time or the power consumption information to the edge device 10-1.

### <Hardware Configuration of Edge Device and Server Device>

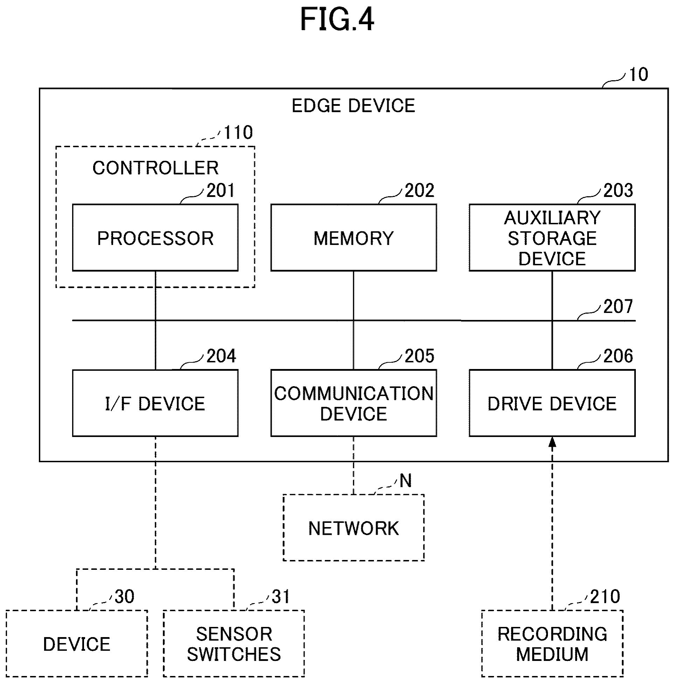

Next, a hardware configuration of the edge device 10 will be described with reference to FIG. 4. FIG. 4 is a diagram illustrating an example of the hardware configuration of the edge device 10. As illustrated in FIG. 4, the edge device 10 includes a processor 201, a memory 202, an auxiliary storage device 203, an interface (I/F) device 204, a communication device 205, and a drive device 206. The hardware elements of the edge device 10 are connected to one another via a bus 207.

The processor 201 includes various computing devices, such as a central processing unit (CPU) or the like. The processor 201 reads various programs into the memory 202, and executes the programs. The processor 201 corresponds to a controller 110 (an example of a first controller and a second controller) that controls the entire edge device 10.

The memory 202 includes a main storage device, such as a read only memory (ROM), a random access memory (RAM), or the like. The processor 201 and the memory 202 form a so-called computer, and the processor 201 executes the various programs read into the memory 202.

The auxiliary storage device 203 stores various programs, and various data that are used when the various programs are executed by the processor 201.

The I/F device 204 is a connection device that connects the edge device 10 to the device 30 and the sensor switches 31, which are examples of external devices.

The communication device 205 is a communication device for communicating with the cloud server 50 via the network N.

The drive device 206 is a device into which a recording medium 210 is set. The recording medium 210 includes a medium for optically, electrically, or magnetically recording information, such as a CD-ROM, a flexible disk, a magneto-optical disk, or the like. In addition, the recording medium 210 may include a semiconductor memory or the like that electrically records information, such as a ROM, a flash memory, or the like.

The various programs installed in the auxiliary storage device 203 are installed by setting a distributed recording medium 210 in the drive device 206 and reading the various programs recorded in the recording medium 210 by the drive device 206. Alternatively, the various programs installed in the auxiliary storage device 203 may be installed by being downloaded from the network N via the communication device 205.

### <<Cloud Server>>

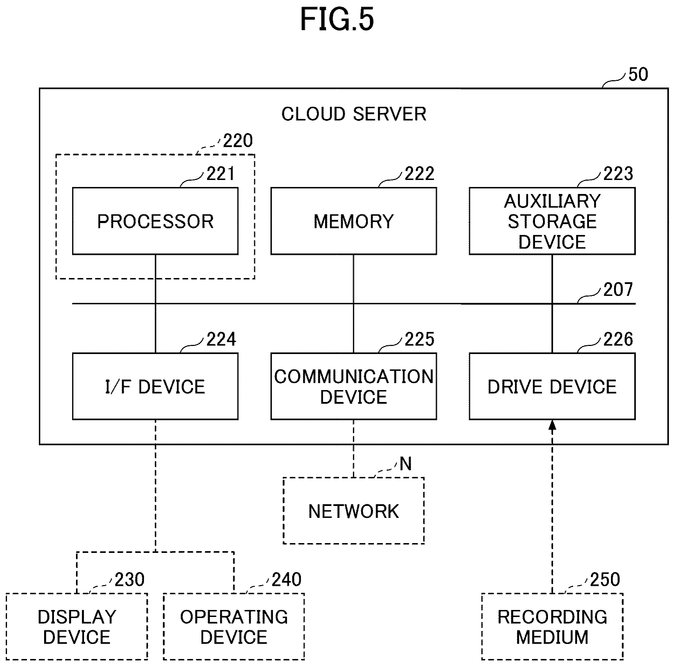

On the other hand, FIG. 5 is a diagram illustrating an example of a hardware configuration of the cloud server 50. Because the hardware configuration of the cloud server 50 is substantially the same as the hardware configuration of the edge device 10, differences from the hardware configuration of the edge device 10 will mainly be described below.

A processor 221 reads various programs into a memory 222 and executes the various programs. The processor 221 corresponds to a controller 220 (an example of a third controller) that controls the entire cloud server 50. An I/F device 224 is a connection device that connects a display device 230 and an operating device 240, which are examples of external devices, to the cloud server 50. The display device 230 displays an internal state of the cloud server 50. The operating device 240 is used when the administrator of the cloud server 50 inputs various instructions to the cloud server 50. A communication device 225 is a communication device for communicating with the edge device 10 and the user terminal 7 via the network N.

### <Functions>

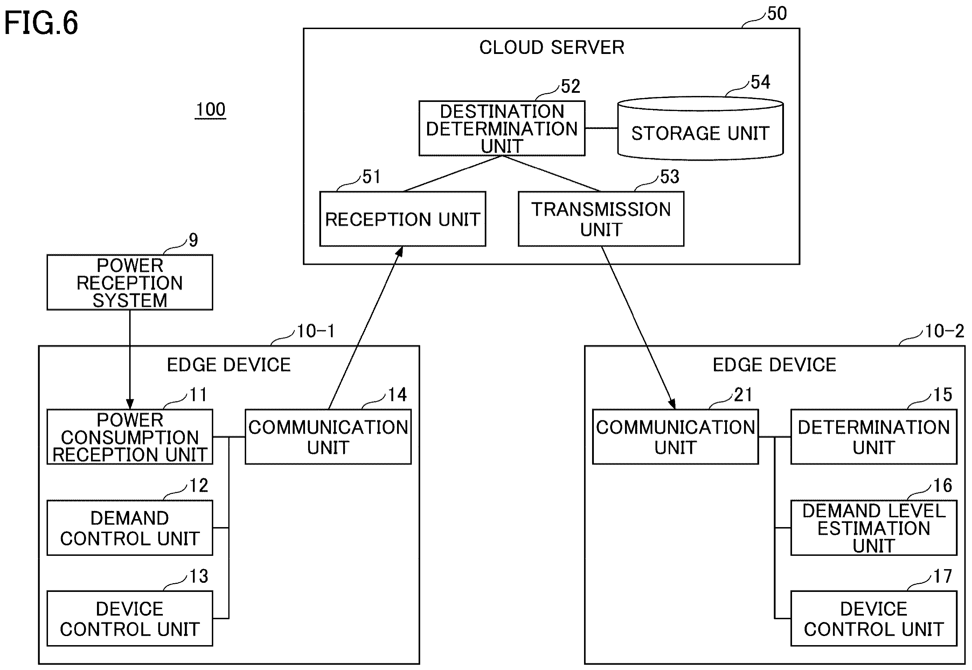

Next, a functional configuration of each device included in the control system 100 will be described in detail with reference to FIG. 6. FIG. 6 illustrates an example of a functional block diagram for explaining functions of the edge device 10-1, the edge device 10-2, and the cloud server 50 of the control system 100 divided into blocks.

### <<Edge Device 10-1>>

The edge device 10-1 includes a power consumption reception unit 11, a demand control unit 12, a device control unit 13, and a communication unit 14. These units included in the edge device 10-1 are functions or means implemented by executing commands of one or more programs by the processor 201 of the edge device 10-1.

The power consumption reception unit 11 receives the pulse from the power reception system 9. The power consumption reception unit 11 may receive an accumulated value of the pulses instead of the pulse, or may receive the power consumption information converted from the accumulated value of the pulses. For example, the power consumption reception unit 11 accumulates the received pulses. The power consumption reception unit 11 creates the power consumption information by periodically accumulating the number of pulses (for every period of time of 30 seconds, 1 minute, or the like, for example, that is shorter than the demand time), for example. The power consumption information may be created irregularly (for example, every time the pulse is received).

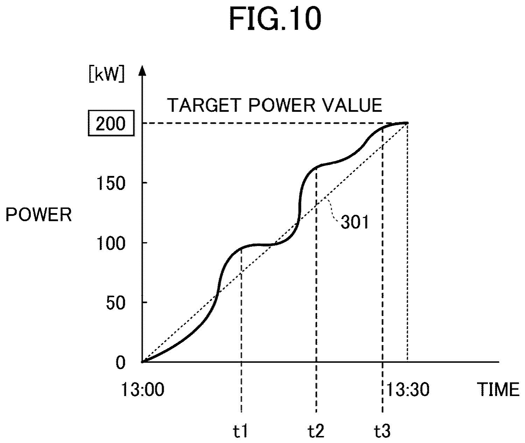

The demand control unit 12 performs the demand control based on the power consumption information and the target amount of power consumption. In the present embodiment, it is assumed that the demand levels of all of the edge devices 10 belonging to the same control group (details will be described later) are determined by the demand control. Accordingly, the demand levels of all of the edge devices 10 belonging to the same control group are the same. The demand control will be described in detail with reference to FIG. 10.

The device control unit 13 controls the operation of each air conditioner 33 connected to the edge device 10-1 at the demand level determined by the demand control unit 12. The device control unit 13 performs, in addition to the demand control, control of the cooling and heating mode, the set temperature, the airflow, the humidity, the airflow direction, or the like of the device 30, control of resetting of the device 30, or the like.

The communication unit 14 communicates with the cloud server 50 via the network N, and in the present embodiment, the communication unit 14 transmits the power consumption information or the information based on the power consumption information to the cloud server 50. The communication between the communication unit 14 and the cloud server 50 may be a network communication such as the Internet or the like, or a network connection provided by a mobile phone carrier. In the case of the network communication, an IP address of the cloud server 50 is known to the communication unit 14, and in the case of network connection, a telephone number of the cloud server 50 is known to the communication unit 14. In the case of the network connection, the communication unit 14 has a SIM card provided by the mobile phone carrier.

### <<Cloud Server>>

The cloud server 50 includes a reception unit 51, a destination determination unit 52, a transmission unit 53, and a storage unit 54. These units included in the cloud server 50 are functions or means implemented by executing commands of one or more programs by a processor 221 of the cloud server 50.

The reception unit 51 receives the power consumption information or the information based on the power consumption information from the edge device 10-1 via the network N.

The destination determination unit 52 determines the edge device 10 belonging to the same control group as the edge device 10-1, as the edge device 10 at a transmission destination of the power consumption information or the information based on the power consumption information, based on a destination determination table stored in the storage unit 54.

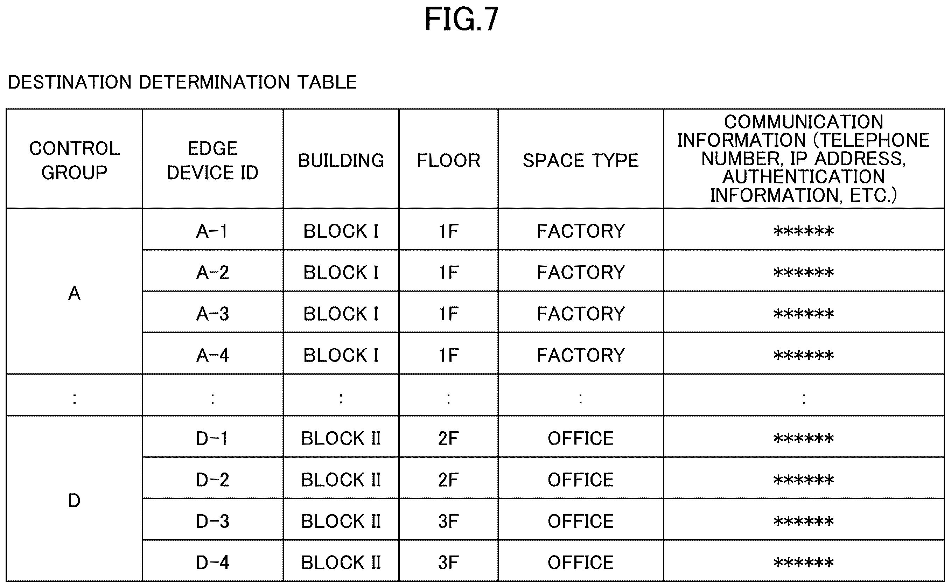

FIG. 7 illustrates an example of the destination determination table stored in the storage unit 54. The destination determination table is a table used by the cloud server 50 to determine the edge device 10 at the transmission destination of the power consumption information or the information based on the power consumption information. Because the cloud server 50 is shared by a plurality of facilities, when the cloud server 50 receives the power consumption information or the information based on the power consumption information, it is unclear to the cloud server 50 the facility to which the power consumption information or the information based on the power consumption information is to be transmitted. Hence, the edge devices 10 belonging to the same control group are registered in advance in the destination determination table. For example, when the building, the floor, or the space type is the same, comfort requirements for the air conditioner 33 are also the same, and thus, the edge devices 10 that control the air conditioners 33 of the same building, the same floor, or the same space type belong to the same control group. The edge devices 10 belonging to the same control group may be subject to the demand control with the same target amount of power consumption. In the present embodiment, the edge devices 10 belonging to the same control group are regarded as the edge devices 10 in the same facility. Whether or not the edge devices 10 belong to the same control group may be determined each time, based on the building, the floor, the space type, or the like in which the air conditioners 33 are installed.

The destination determination table registers information related to the control group and information related to the location to be air conditioned by the air conditioner 33 connected to each edge device 10. The information related to the control group and the information related to the location are examples of information related to the control device. The location to be air conditioned is specified by the building, the floor, and the space type, for example. Communication information is information for the cloud server 50 to communicate with the edge device 10. The communication information may be a telephone number, an IP address, authentication information, or the like of the cloud server 50.

The destination determination unit 52 determines to transmit the power consumption information or the information based on the power consumption information to the edge device 10 belonging to the same control group as the edge device 10-1 to which the power consumption information or the information based on the power consumption information is transmitted. Alternatively, the destination determination unit 52 determines to transmit the power consumption information or the information based on the power consumption information to:
the edge device 10 connected to the air conditioner 33 that air conditions the same building as the edge device 10-1 to which the power consumption information or the information based on the power consumption information is transmitted;
the edge device 10 connected to the air conditioner 33 that air conditions the same building and the same floor as the edge device 10-1 to which the power consumption information or the information based on the power consumption information is transmitted; and
the edge device 10 connected to the air conditioner 33 that air conditions the same space type as the edge device 10-1 to which the power consumption information or the information based on the power consumption information is transmitted.
In the present embodiment, the edge device 10 at the transmission destination is determined to be the edge devices 10-2 to 10-n.

The transmission unit 53 transmits the power consumption information or the information based on the power consumption information to the edge devices 10-2 to 10-n to which the destination determination unit 52 determines to transmit the power consumption information or the information based on the power consumption information. In a case where the cloud server 50 and the edge devices 10-2 to 10-n are connected via a network connection, the cloud server 50 can transmit information to the edge devices 10-2 to 10-n from the outside of the facility. In addition, in a case where the cloud server 50 and the edge devices 10-2 to 10-n communicate via a network communication, the communication may not be possible due to a firewall. In this case, there is a method in which the edge devices 10-2 to 10-n repeatedly perform a polling to request communication to the cloud server 50 in order for the cloud server 50 to transmit the power consumption to the edge devices 10-2 to 10-n on the inner side of the firewall. The transmission unit 53 transmits the power consumption information or the information based on the power consumption information to the edge devices 10-2 to 10-n in response to the polling. The transmission unit 53 may communicate with the edge devices 10-2 to 10-n using a bidirectional communication, such as WebSocket or the like.

The transmission unit 53 checks whether or not the communication is possible, for example, even when the demand level is not received from the edge device 10-1, so that the edge device 10-2 can detect an interruption of the communication.

### <<Edge Device 10-2>>

The edge device 10-2 includes a communication unit 21, a determination unit 15, a demand level estimation unit 16, and a device control unit 17. The communication unit 21 and the device control unit 17 are the same as those of the edge device 10-1, and will be described as required.

The determination unit 15 performs various determinations. The determination unit 15 determines whether or not the communication between the communication unit 21 and the cloud server 50 is interrupted. For example, in a case where a cycle of the demand control is one minute, and the communication unit 21 does not receive the power consumption information or the information based on the power consumption information from the cloud server 50 for more than one minute, the determination unit 15 determines that the communication is interrupted. Alternatively, the determination unit 15 may detect the interruption of the communication in a case where the communication unit 21 periodically starts a communication with the cloud server 50 and receives no response. In addition, in the case where the communication is interrupted, the determination unit 15 determines whether or not a reduction of the power consumption is required (whether or not the demand control is required) in the edge device 10-2.

In the case where the communication is interrupted and it is determined that the reduction of the power consumption is required, the demand level estimation unit 16 estimates a demand level required for the device 30 connected to the edge device 10-2. That is, because the edge device 10-2 cannot receive the power consumption information or the information based on the power consumption information from the cloud server 50, the edge device 10-2 estimates an appropriate demand level.

It is assumed that the functional block diagrams of the edge devices 10-3 to 10-n are also the same as that of the edge device 10-2.

### <<Demand Control Unit>>

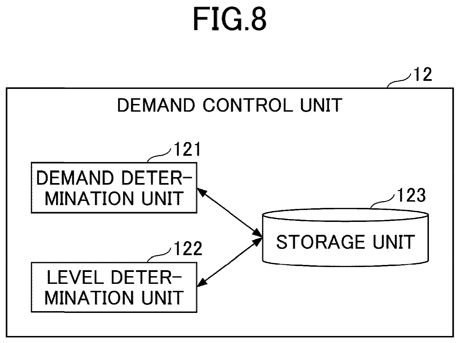

FIG. 8 is a functional block diagram for explaining the functions of the demand control unit 12 in detail. The demand control unit 12 includes a demand determination unit 121, a level determination unit 122, and a storage unit 123. First, various tables stored in the storage unit 123 will be described.

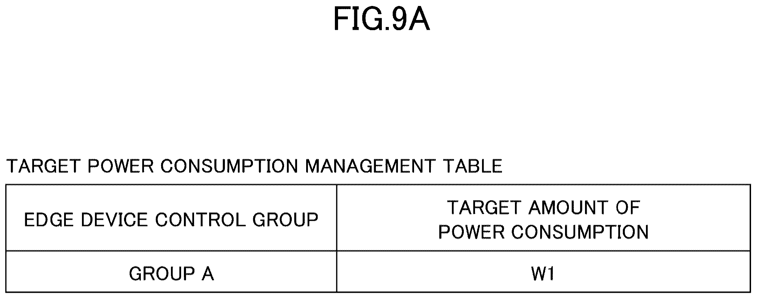

FIG. 9A illustrates an example of a target power consumption management table stored in the storage unit 123. The target power consumption management table defines a target amount of power consumption of the control group. The target amount of power consumption may be set for each control group, or the target amount of power consumption may be determined for one facility, and the demand level may be set for the target amount of power consumption set for one facility in a plurality of control groups. The target power consumption management table does not necessarily have to be provided for each control group. Because one target amount of power consumption is determined for one control group, each edge device 10 is controlled to the same demand level regardless of the power consumption of the device 30 connected to the edge device 10.

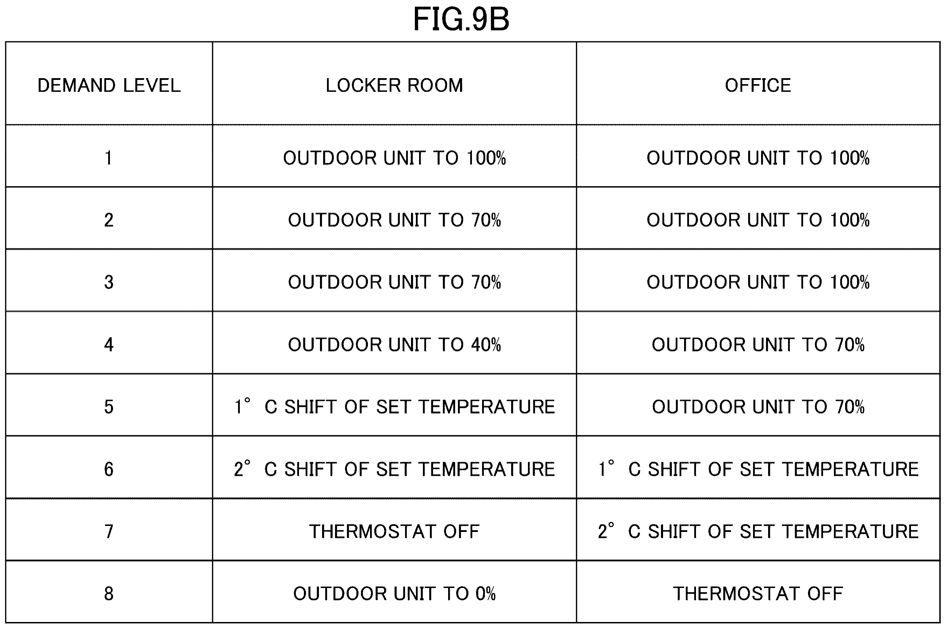

FIG. 9B illustrates an example of a demand level table stored in the storage unit 123. Because the comfort required for the air conditioner 33 varies depending on the space, the demand level is determined according to the space to be air conditioned. For example, a demand level 4 of a locker room shifts the set temperature by 1°C (1°C higher for cooling and 1°C lower for heating), while the demand level 4 of an office reduces a capacity of an outdoor unit to 70%. The device control unit 13 reduces a capacity of the air conditioner 33 based on the demand level notified from the level determination unit 122 and the space to be air conditioned by the air conditioner 33.

In FIG. 9B, the demand level of the air conditioner 33 is set, but in the case of lighting, for example, the demand level may be set according to the space to be air conditioned.

A description will be made by referring back to FIG. 8. The demand determination unit 121 determines whether or not to adjust the demand level based on the target power consumption management table. The demand determination unit 121 determines whether or not the power consumption information is likely to exceed the target amount of power consumption. An example of the determination will be described with reference to FIG. 10. FIG. 10 is a diagram schematically illustrating a process of determining whether or not the power consumption information is likely to exceed the target amount of power consumption. In FIG. 10, the target amount of power consumption is assumed to be 200 [kW]. Accordingly, a straight line 301 that reaches 200 [kW] after 30 minutes from a start of a demand time at 0 [kW] indicates the target amount of power consumption at each time. Hence, the demand determination unit 121 compares the amount of power consumption with the target amount of power consumption for every time (for example, 30 seconds or one minute) shorter than the demand time, and determines to increase the demand level by one when "power consumption information > target amount of power consumption".

Because it is preferable to increase the demand level before the state where "power consumption information > target amount of power consumption" actually occurs, the demand determination unit 121 predicts power consumption information after a certain time using the power consumption information. Simply put, in a case where the same power consumption information continues even after the certain time, it is sufficient to determine whether or not "power consumption information > target amount of power consumption" stands. Accordingly, the level determination unit 122 determines to increase the demand level by one in the case where "predicted power consumption information > target amount of power consumption" after the certain time. In addition, the method of predicting the power consumption information may be an existing method. The demand determination unit 121 may use a model in which recent power consumption information, set temperature, indoor temperature, time, an outdoor temperature, or the like are explanatory variables, and the power consumption information after the certain time is a dependent variable, and predict the power consumption information after the certain time based on the model.

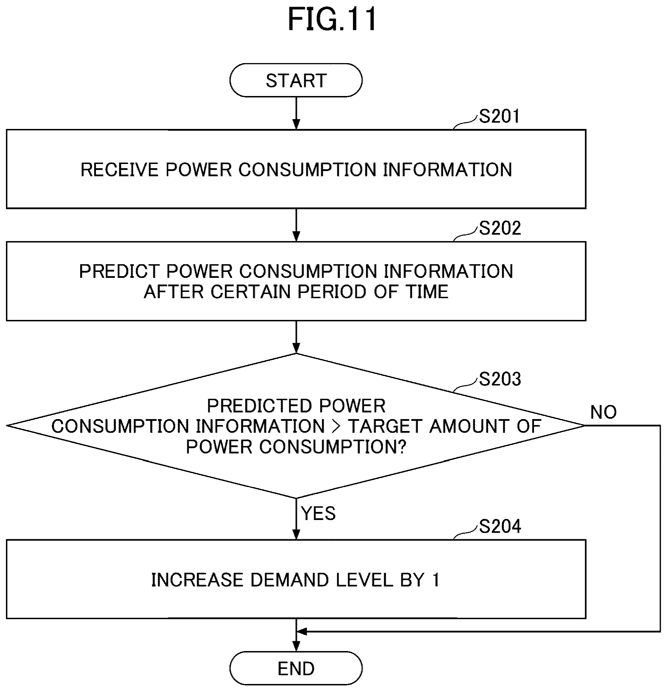

FIG. 11 illustrates an example of a flow chart for explaining a method of determining the demand level.

First, the power consumption reception unit 11 receives the power consumption information from the power reception system 9 (S201).

The demand determination unit 121 predicts the power consumption information after the certain time using the model, for example (S202).

The demand determination unit 121 determines whether or not "predicted power consumption information > target amount of power consumption" stands (S203).

In a case where the determination result in step S203 is Yes, the process proceeds to step S204, and in a case where the determination result in step S203 is No, the process of FIG. 11 ends.

In step S204, the level determination unit 122 increases the demand level by one from the current demand level (S204).

In the example of FIG. 10, it is determined that "predicted power consumption information > target amount of power consumption" at each of times t1, t2, and t3. The demand control unit 12 increases the demand level, and thus, the power consumption information falls within the target amount of power consumption after 30 minutes elapses. In the case where "power consumption information <= target amount of power consumption" when the determination result in step S203 of FIG. 11 is No, the level determination unit 122 may decrease the demand level according to a margin with respect to the target amount of power consumption.

Returning to the description of FIG. 8, when the level determination unit 122 receives a notification from the demand determination unit 121 to increase the demand level by one, the level determination unit 122 increases the current demand level by one. In a case where a predetermined time elapses after receiving the notification to increase of the demand level by one from the demand determination unit 121, the level determination unit 122 may return the demand level based on the margin with respect to the target amount of power consumption. This predetermined time is a time for preventing hunting, and is a time for determining that the demand level may be decreased because there is no notification to increase the demand level by one. For example, if the demand level is determined for every 1 minute, the predetermined time may be approximately 3 minutes. In a case where the margin with respect to the amount of power consumption is greater than or equal to a threshold value, the level determination unit 122 decreases the demand level by one.

### <Operation or Process>

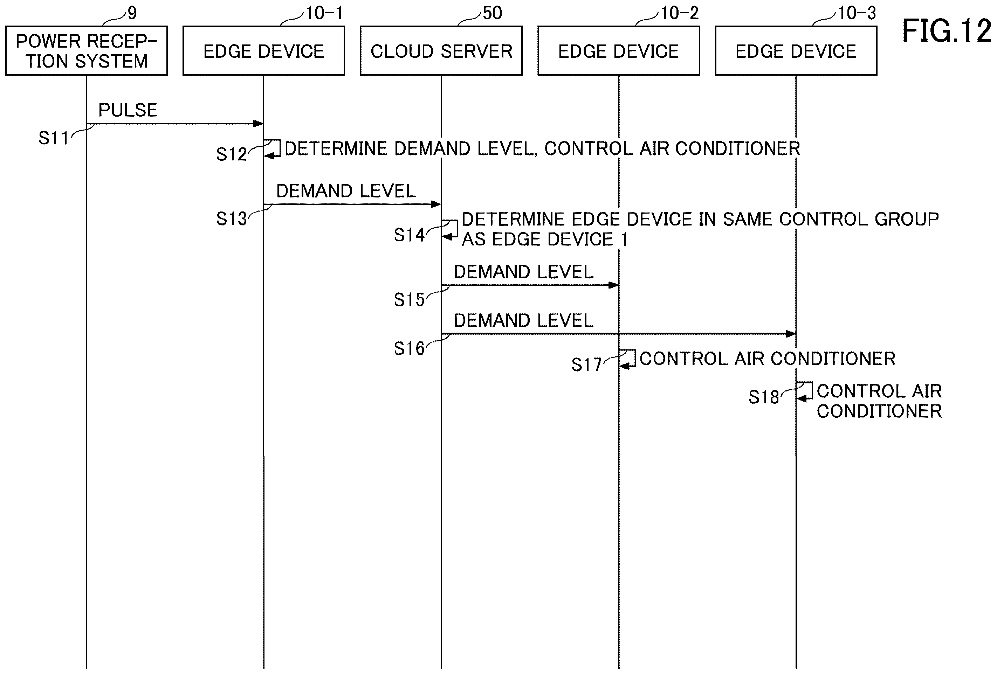

Next, a flow chart of a process in which a plurality of edge devices 10 share a demand level will be described with reference to FIG. 12. FIG. 12 is a sequence diagram for explaining a process in which the edge device 10-1 transmits a demand level to the edge devices 10-2 and 10-3 via the cloud server 50. Although the edge devices 10-1 to 10-3 are illustrated in FIG. 12, the demand level is shared by all of the edge devices 10-2 to 10-n belonging to the same control group.

S11: First, the power reception system 9 transmits a pulse to the edge device 10-1.

S12: The power consumption reception unit 11 of the edge device 10-1 receives the pulse. The power consumption reception unit 11 converts the pulse into the power consumption information for every time shorter than the demand time. The demand control unit 12 determines the demand level for every period of time shorter than the demand time. That is, the demand determination unit 121 determines whether or not "predicted power consumption information > target amount of power consumption". In the case where "predicted power consumption information > target amount of power consumption", the level determination unit 122 determines a demand level that is one level higher than the current demand level. In addition, the device control unit 13 controls the device 30 connected to the edge device 10-1 at the instructed demand level.

S13: The communication unit 14 of the edge device 10-1 transmits the demand level to the cloud server 50 together with an edge device ID of the edge device 10-1. The edge device ID of the edge device 10-1 is used for the destination determination unit 52 of the cloud server 50 to determine the edge device 10 belonging to the same control group.

The edge device 10-1 may determine the edge device 10 belonging to the same control group, and instruct the same to the cloud server 50. In this case, the edge device 10-1 includes the destination determination unit 52 and the destination determination table, and also transmits the communication information of the edge device 10 belonging to the same control group to the cloud server 50.

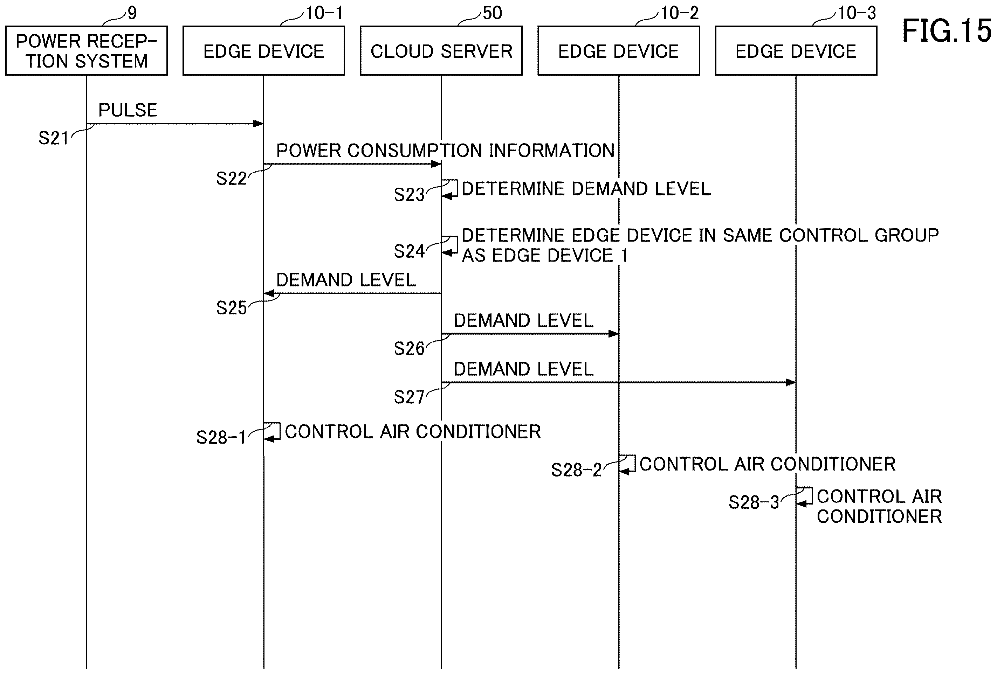

Moreover, the communication unit 14 may transmit the power consumption information to the cloud server 50 instead of the demand level (or together with the demand level). In this case, the cloud server 50 can determine the demand level similar to the edge device 10-1, as long as the cloud server 50 includes the level determination unit 122 and the target power consumption management table (details of this process will be described with reference to FIG. 15).

Further, the communication unit 14 may transmit a difference from the current demand level to the cloud server 50 instead of the demand level (or together with the demand level). The difference from the current demand level is not the demand level itself but information, such as increasing or decreasing the demand level by one, or the like.

In addition, the communication unit 14 may transmit a margin with respect to the target amount of power consumption to the cloud server 50 instead of the demand level (or together with the demand level). The margin with respect to the target amount of power consumption facilitates the control of the edge device 10-2 to decrease the demand level.

S14: The reception unit 51 of the cloud server 50 receives the edge device ID and the demand level, and the destination determination unit 52 determines the edge device 10 at the transmission destination based on the destination determination table. The destination determination unit 52 determines the edge device 10 belonging to the same control group as the edge device 10-1. The destination determination unit 52 may determine the edge device 10 that performs the air conditioning on the same building, floor, and space type as those of the edge device 10-1. In this example, the edge devices 10-2 and 10-3 are determined as the edge device 10 at the transmission destination.

S15 and S16: The transmission unit 53 of the cloud server 50 transmits the demand level received from the edge device 10-1 to the edge devices 10-2 and 10-3.

S17 and S18: The communication units 21 of the edge devices 10-2 and 10-3 receive the demand level, and the device control units 17 control the air conditioners 33 connected to the edge devices 10-2 and 10-3 at the instructed demand level. When the communication units 21 of the edge devices 10-2 and 10-3 receive the difference of the demand level, the device control units 17 vary (increase or decrease) the demand level by the difference. In a case where the communication units 21 of the edge devices 10-2 and 10-3 receive the margin with respect to the target amount of power consumption, the device control units 17 increase the demand level when the margin is less than a threshold value 1, and decrease the demand level while avoiding hunting when the margin exceeds a threshold value 2 (> threshold value 1).

By the process described above, the demand level calculated by the edge device 10-1 is shared by the edge devices 10-2 to 10-n belonging to the same control group via the cloud server 50, and the device 30 or the like can be controlled at the same demand level.

### <Case where Communication between Edge Devices 10-2 to 10-n and Cloud Server 50 is Interrupted>

A case may occur where communication with the cloud server 50 is interrupted in one or more of the edge devices 10-2 to 10-n. In this case, the edge device 10 in which the communication is interrupted determines the demand level by itself.

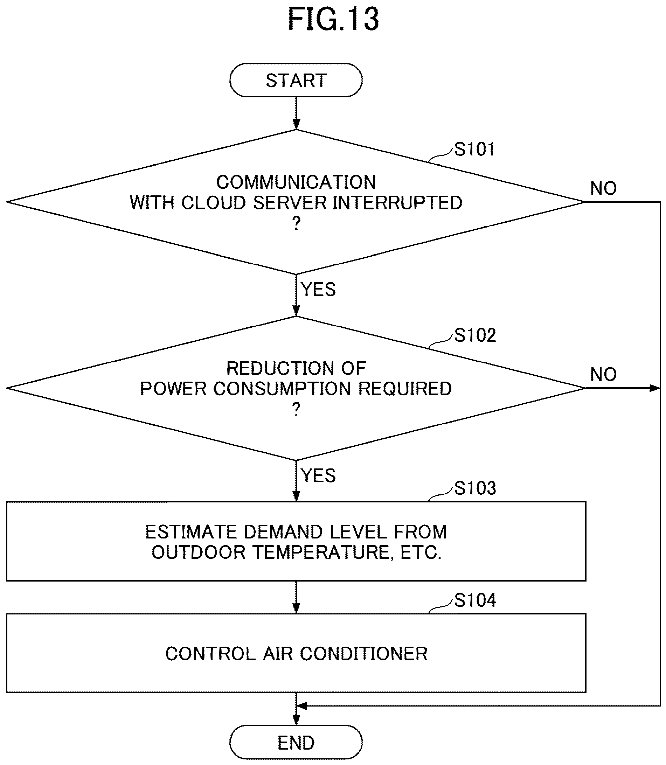

FIG. 13 is a flow chart for explaining a process in which the demand level estimation unit 16 of the edge device 10-2 estimates the demand level. The process of FIG. 13 is repeatedly performed.

First, the determination unit 15 determines whether or not the communication with the cloud server 50 is interrupted (S101). The determination unit 15 can determine that the communication is interrupted in at least one of a case where new power consumption information or information based on the power consumption information is not received from the cloud server 50 for a certain period of time (may be a case where "no demand level change" is not received) and a case where the communication with the cloud server 50 cannot be performed even when an attempt is made to perform the communication. In addition, even when the communication with the cloud server 50 is not interrupted in the edge device 10-2, in a case where the communication between the edge device 10-1 and the cloud server 50 is interrupted, the cloud server 50 notifies the edge device 10-2 of the interruption, and the determination unit 15 determines that the communication is interrupted.

In a case where the determination result in step S101 is Yes, the process proceeds to step 102, and in a case where the determination result in step S101 is No, the process of FIG. 13 ends.

In step S102, the determination unit 15 determines whether or not the reduction of the power consumption is required in the edge device 10-2 (S102). The determination unit 15 determines whether or not the power consumption is to be reduced by itself, based on information such as the outdoor temperature, the set temperature, the indoor temperature, a current time, or a past demand level, for example. During the cooling, in a case where the outdoor temperature is very high (higher than or equal to a threshold value), the power consumption is large, and thus, the determination unit 15 determines to reduce the power consumption. During the heating, in a case where the outdoor temperature is very low (lower than or equal to the threshold value), the power consumption is large, and thus, the determination unit 15 determines to reduce the power consumption. In addition, in a case where a difference between the set temperature and the indoor temperature is large, the power consumption is large, and thus, the determination unit 15 determines to reduce the power consumption. Moreover, during cooling, the power consumption is large between the times 10:00 and 17:00, and thus, the determination unit 15 determines to reduce the power consumption. During the heating, the power consumption is large between the times 8:00 and 10:00 and the times on or after 15:00, and thus, the determination unit 15 determines to reduce the power consumption. Further, in a case where the demand level transmitted from the cloud server 50 in the past increased with time, the determination unit 15 determines to reduce the power consumption. In a case where there is no change in the demand level transmitted from the cloud server 50 in the past, the determination unit 15 determines not to reduce the power consumption. The determination unit 15 may finally determine whether or not to reduce the power consumption, based on whether or not the determination unit 15 determines to reduce the power consumption a number of times greater than or equal to a threshold value for the determination factors described above.

In a case where the determination result in step S102 is Yes, the process proceeds to step 103, and in a case where the determination result in step S102 is No, the process of FIG. 13 ends.

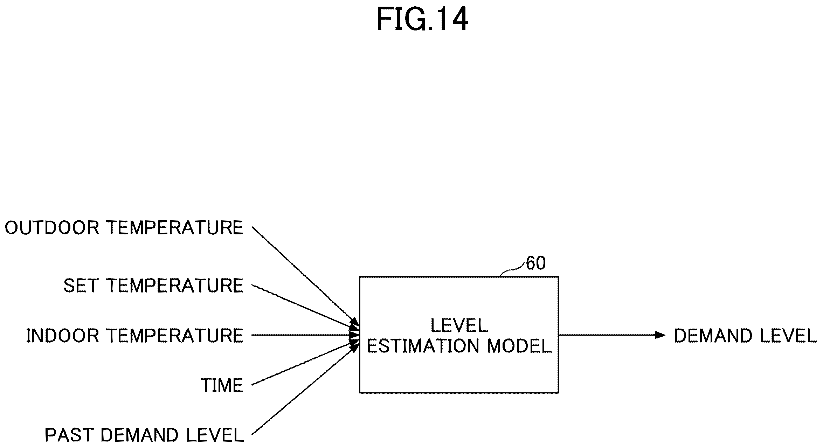

In step S103, the demand level estimation unit 16 estimates an appropriate demand level in the edge device 10-2 (S103). For example, the demand level estimation unit 16 estimates the demand level using a demand level estimation model 60 trained in advance. The process of step S103 will be described with reference to FIG. 14.

The device control unit 17 controls the operation of each air conditioner 33 connected to the edge device 10-2, at the demand level estimated by the demand level estimation unit 16 (S104).

FIG. 14 is a diagram for explaining the demand level estimation model 60. The demand level estimation model 60 already learned the correspondence between the factors affecting the power consumption and the demand level. In FIG. 14, the outdoor temperature, the set temperature, the indoor temperature, the time, and the past demand level are illustrated as the factors affecting the power consumption. The demand level estimation model 60 estimates the demand level.

A demand level transmitted from the cloud server 50 to the edge device 10-2 (a demand level determined by the edge device 10-1) may be used as training data during learning. During the learning, an arbitrary information processing apparatus may learn the correspondence between the outdoor temperature, the set temperature, the indoor temperature, and the past demand level, and the demand level received from the cloud server 50. Multiple regression, deep learning, or the like are known as learning methods. Because the edge device 10-2 can acquire information required for the learning in real time, it is possible to generate or update the demand level estimation model 60 while communication is not interrupted.

Accordingly, the demand level estimation unit 16 can estimate the demand level from the information (past demand level) acquired before the communication is interrupted, or the information (the outdoor temperature, the set temperature, the indoor temperature, and the time) acquirable after the communication is interrupted. The demand level estimation unit 16 may determine to simply perform the demand control of the device 30 at a maximum demand level without using the demand level estimation model 60.

In addition, the demand level estimation model 60 may be a model that outputs a difference between demand levels or a margin with respect to a target amount of power consumption, instead of outputting the demand level.

### <Case where Cloud Server Determines Demand Level>

Next, a case where the cloud server 50 determines the demand level will be described with reference to FIG. 15. FIG. 15 is a sequence diagram for explaining a process in which the edge device 10-1 transmits the power consumption information to the cloud server and the cloud server transmits the demand level to the edge devices 10-1 to 10-3. In the description of FIG. 15, differences from FIG. 12 will mainly be described. It is assumed that the cloud server 50 includes the demand control unit 12 in order for the cloud server 50 to determine the demand level.

S21: First, the power reception system 9 transmits a pulse to the edge device 10-1.

S22: The power consumption reception unit 11 of the edge device 10-1 receives the pulse. The power consumption reception unit 11 converts the pulse into the power consumption information for every period of time shorter than the demand time. The communication unit 14 of the edge device 10-1 transmits the power consumption information to the cloud server 50 together with the edge device ID of the edge device 10-1. In FIG. 15, the edge device 10-1 may determine the demand level.

S23: The reception unit 51 of the cloud server 50 receives the power consumption information. The demand control unit 12 of the cloud server 50 determines the demand level for every period of time shorter than the demand time. This process may be similar to that of step S12 illustrated in FIG. 12.

S24: Moreover, the destination determination unit 52 of the cloud server 50 determines the edge device 10 of the transmission destination based on the destination determination table. This process may be the same as that in step S14 of FIG. 12.

S25 to S27: The transmission unit 53 of the cloud server 50 transmits the demand level with respect to the edge devices 10-1, 10-2, and 10-3. At least one of the difference between the demand levels or the margin with respect to the target amount of power consumption may be transmitted instead of the demand level (or together with the demand level).

S28-1 to S28-3: The communication unit 14 of the edge device 10-1 and the communication units 21 of the edge devices 10-2 and 10-3 receive the demand level, and the device control units 13 and 17 control the devices 30 connected to the edge devices 10-1, 10-2, and 10-3 at the instructed demand level.

As described above, even when the cloud server 50 determines the demand level, the edge devices 10-1, 10-2, and 10-3 can share the demand level.

### <Supplementary Information on System Configuration>

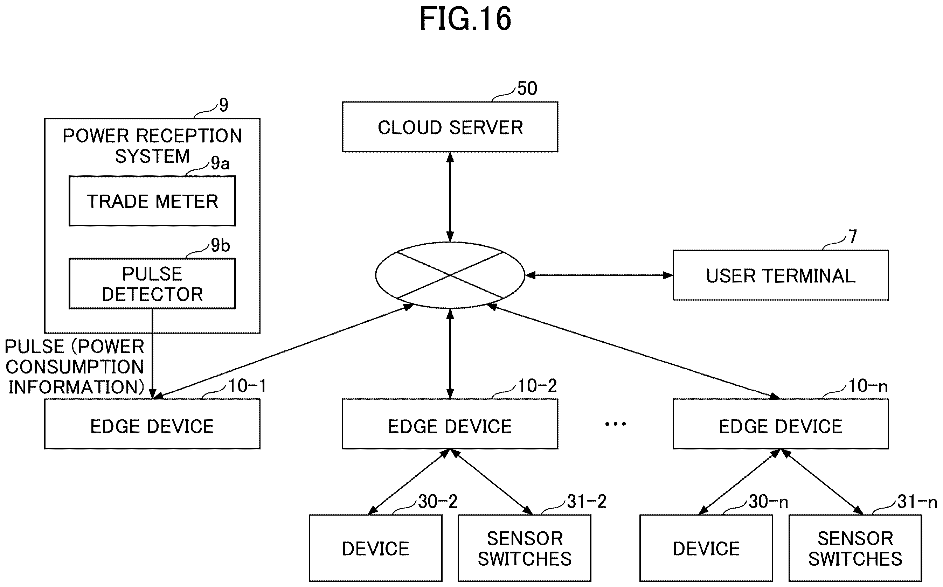

FIG. 16 illustrates a modification of the system configuration of the control system 100. In FIG. 16, the device 30 and the sensor switches 31 are not connected to the edge device 10-1. In this case, the edge device 10-1 serves as a relay device that relays the power consumption information or the information based on the power consumption information to the cloud server 50. The functions of the edge device 10-1, other than not controlling the device 30 and the sensor switches 31, may be similar to those of FIG. 3. Such a configuration is effective in a case where the edge device 10 is not disposed near the power reception system 9, for example. That is, because the cost increases when providing the wiring for connection to the edge device 10-2 located far from the power reception system 9, the cost can be reduced by disposing the edge device 10-1 for the relay near the power reception system 9.

### <Main Effects>

The edge device 10-1 of the present embodiment is connected to the power reception system 9 via the cable, and thus, the likelihood of the communication being interrupted is low. Moreover, because the edge device 10-1 transmits the power consumption information or the information based on the power consumption information to one or more other edge devices 10-2 or the like, the edge device 10-2 does not need to determine the demand level. Hence, a plurality of edge devices 10 can share the same demand level.

### [Second Embodiment]

In the present embodiment, the control system 100 in which the edge device 10-1 can communicate with the edge device 10-2 without the intervention of the cloud server 50 will be described.

In the present embodiment, because the constituent elements designated by the same reference numerals as those in the drawings described above have the same functions, a description of the constituent elements described once above may be omitted or only the differences therefrom may be described.

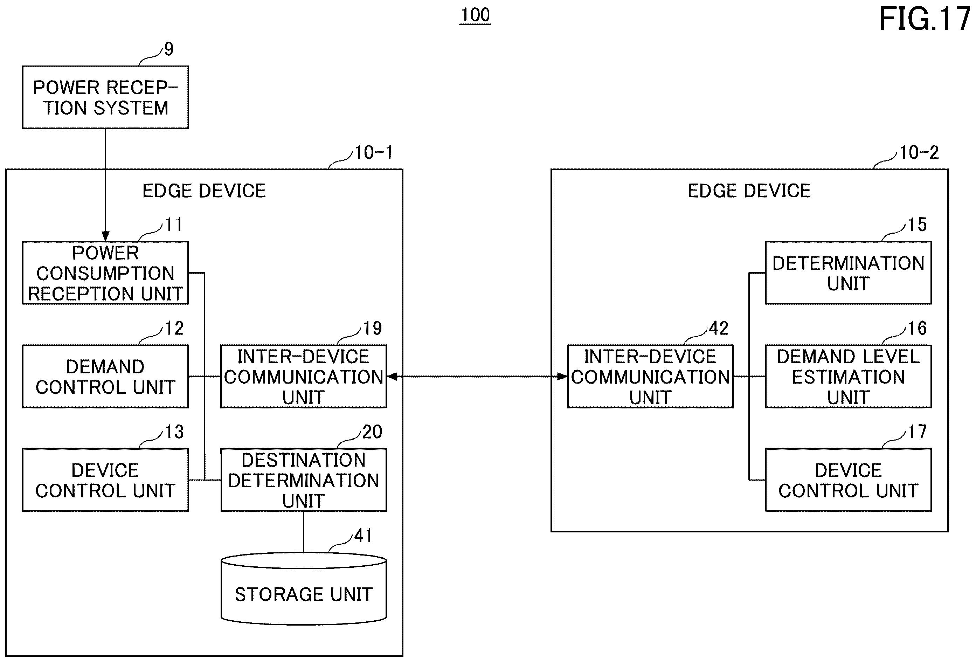

FIG. 17 is an example of a functional block diagram illustrating the functions of the edge device 10-1 and the edge device 10-2 in the control system 100 divided into blocks. In the present embodiment, the cloud server 50 is not provided, and the edge devices 10-1 and 10-2 include inter-device communication units 19 and 42, respectively. In addition, the edge device 10-1 includes a storage unit 41 and a destination determination unit 20.

The inter-device communication unit 19 communicates directly and wirelessly with the edge device 10-2. As a communication method in which the edge device 10-1 communicates directly and wirelessly with the edge device 10-2, methods of communicating via the network connection provided by the mobile phone carrier, a wireless LAN, Bluetooth (registered trademark), or the like are known. In the case of the wireless LAN, the inter-device communication unit 19 may communicate via an access point, or may communicate one-on-one as in direct Wi-Fi (registered trademark). The inter-device communication unit 19 transmits the information based on the power consumption information to the edge device 10-2.

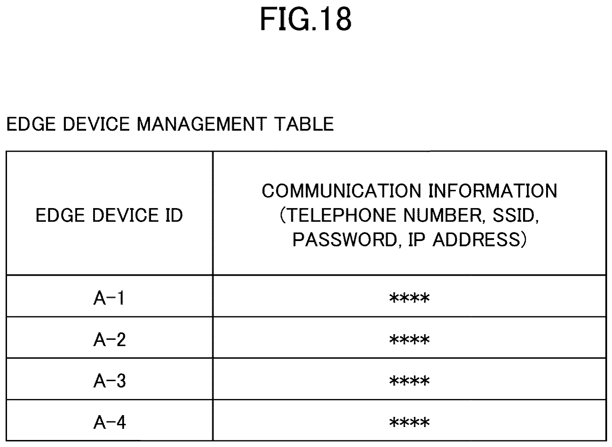

FIG. 18 illustrates an example of an edge device management table registered in advance in the storage unit 41. The edge device management table includes information related to the edge device 10 belonging to the same control group as the edge device 10-1. The edge device management table includes information for the edge device 10-1 to transmit the power consumption information or the information based on the power consumption information to the other edge devices 10-2 to 10-n belonging to the same control group as the edge device 10-1.
·The edge device ID is identification information for identifying the edge device 10. A-1 identifies the edge device 10-1 that belongs to a control group A and receives the pulse from the power reception system 9. The edge device 10-1 having the edge device ID A-1 shares the power consumption information or the information based on the power consumption information with the edge devices 10-2, 10-3, and 10-4 having the edge device IDs A-2, A-3, and A-4, respectively.
·The communication information is information for the inter-device communication unit 19 of the edge device 10-1 to communicate with another edge device 10. In the case of the communication via the network connection, the communication information is a telephone number. In addition, in the case of the communication via the wireless LAN, the communication information may be an SSID, a password, and an IP address, for example.

Returning to the description of FIG. 17, the destination determination unit 20 determines the edge device 10 at the transmission destination based on the destination determination table stored in the storage unit 41. The destination determination table may be similar to that of FIG. 7. The inter-device communication unit 19 transmits the power consumption information or the information based on the power consumption information to the edge device 10 belonging to the same control group determined by the destination determination unit 20.

According to such a configuration, the edge device 10-1 can transmit the power consumption information or the information based on the power consumption information to the edge device 10-2 without the intervention of the cloud server 50.

### <Operation or Process>

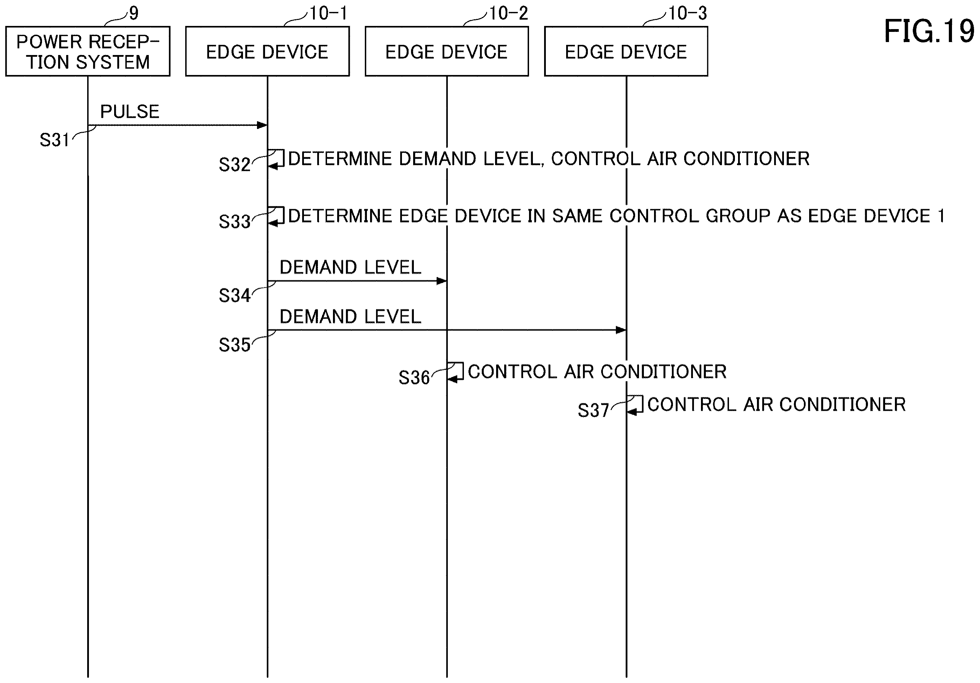

Next, a flow chart of a process in which a plurality of edge devices 10 share a demand level will be described with reference to FIG. 19. FIG. 19 is a sequence diagram for explaining a process in which the edge device 10-1 transmits the demand level to the edge devices 10-2 and 10-3 without the intervention of the cloud server 50. In the description of FIG. 19, differences from FIG. 12 may be described.

S31 and S32: The processes of steps S31 and S32 may be similar to those of steps S11 and S12.

S33: The destination determination unit 20 of the edge device 10-1 determines the edge device 10 at the transmission destination based on the destination determination table. The destination determination unit 20 determines the edge device 10 belonging to the same control group as the edge device 10-1. The destination determination unit 20 may determine the edge device 10 that performs the air conditioning in the same building, floor, and space type as those of the edge device 10-1. In this example, the edge devices 10-2 and 10-3 are determined as the edge devices 10 at the transmission destination.

S34 and S35: The inter-device communication unit 19 of the edge device 10-1 transmits the demand level to the edge devices 10-2 and 10-3 together with the edge device ID of the edge device 10-1. The edge device ID of the edge device 10-1 is used by the edge devices 10-2 and 10-3 to check whether or not the edge device 10-1 at a transmission source is an edge device 10 belonging to the same control group as the edge devices 10-2 and 10-3. The edge devices 10-2 and 10-3 are assumed to have a destination determination table, and verify the edge device 10-1 at the transmission source. Accordingly, it is possible to reduce a likelihood of the edge devices 10-2 and 10-3 receiving an erroneous demand level.

The inter-device communication unit 19 may transmit the power consumption information to the edge devices 10-2 and 10-3 instead of the demand level (or together with the demand level). In this case, the edge device 10-2 can determine the demand level similar to the edge device 10-1 as long as the edge device 10-2 includes the level determination unit 122 and the target power consumption management table. In addition, the inter-device communication unit 19 may transmit at least one of a difference between demand levels and a margin with respect to the target amount of power consumption to the edge devices 10-2 and 10-3.

S36 and S37: The inter-device communication units 42 of the edge devices 10-2 and 10-3 receive the demand level, and the device control units 17 control the devices 30 connected to the edge devices 10-2 and 10-3 at the instructed demand level.

By the processes described above, the demand level calculated by the edge device 10-1 can be shared by the edge devices 10-2 to 10-n belonging to the same control group, and the connected devices 30 or the like can be controlled, without the intervention of the cloud server 50.

The processes performed in a case where the communication between the edge device 10-1 and the edge device 10-2 or 10-3 is interrupted may be similar to those of FIG. 13 and FIG. 14 of the first embodiment. The edge device 10-2 or 10-3 detects the interruption of communication by at least one of a case where the demand level is not received from the edge device 10-1 for a certain time or more (may be a case where "no demand level change" is not received) and a case where communication cannot be performed even when an attempt is made to communicate with the edge device 10-1. After detecting the interruption of the communication, the edge device 10-2 or 10-3 performs the process of FIG. 13.

### <Case where Each Edge Device Determines Demand Level>

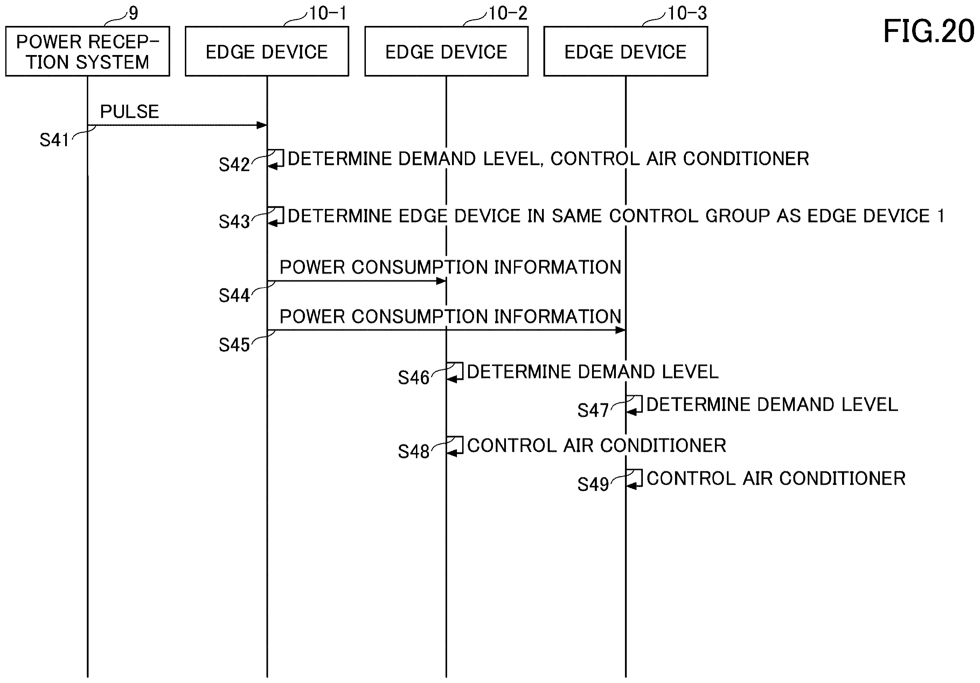

FIG. 20 is a sequence diagram for explaining a process in which each edge device 10 determines the demand level. In the description of FIG. 20, differences from FIG. 19 will mainly be described. Each edge device 10 is assumed to include a demand control unit 12, because each edge device 10 determines the demand level.

S41 to S43: Processes of steps S41 to S43 may be the same as those of steps S31 to S33.

S44 and S45: The inter-device communication unit 19 of the edge device 10-1 transmits the power consumption information to the edge devices 10-2 and 10-3 together with the edge device ID of the edge device 10-1. The edge device ID of the edge device 10-1 is used by the edge devices 10-2 and 10-3 to check whether or not the edge device 10-1 at the transmission source is an edge device 10 belonging to the same control group as the edge devices 10-2 and 10-3.

S46 and S47: The inter-device communication units 42 of the edge devices 10-2 and 10-3 receive the power consumption information. Then, the demand control unit 12 determines the demand level as described with reference to FIG. 10.

S48 and S49: The device control units 17 of the edge devices 10-2 and 10-3 control the devices 30 connected to the edge devices 10-2 and 10-3 at the determined demand level.

According to such processes, because each edge device 10 originally has the function of determining the demand level, it is possible to reduce the modification in the functions of the edge device 10.

In the present embodiment, the device 30 and the sensor switches 31 may not be connected to the edge device 10-1.

### <Main Effects>

The edge device 10-1 of the present embodiment can obtain effects similar to those obtainable by the first embodiment, even without the provision of the cloud server 50.

### [Third Embodiment]

In the present embodiment, a control system 100 in which the edge device 10 can communicate with the cloud server 50 and can also communicate with another edge device 10 will be described.

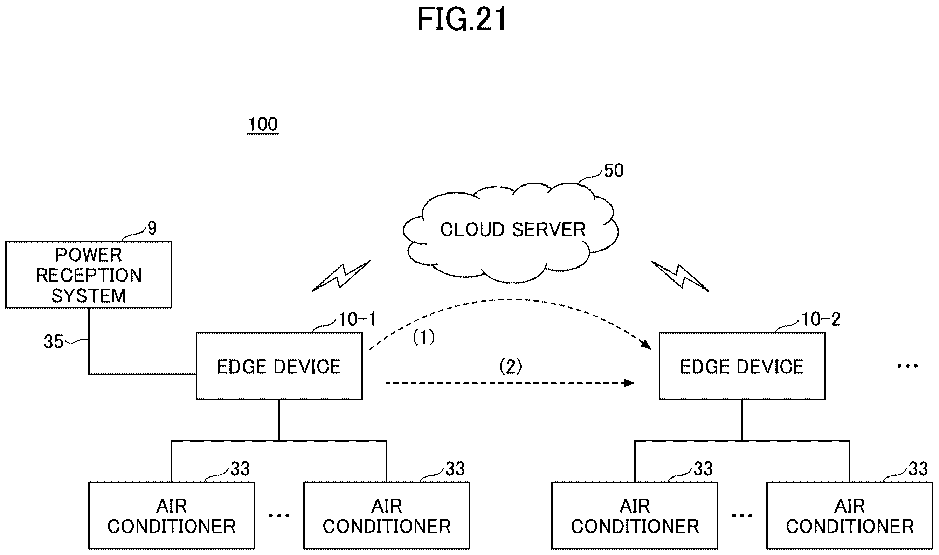

FIG. 21 is a schematic configuration diagram of a control system 100 according to the present embodiment. In FIG. 21, the control system 100 has a configuration obtained by incorporating the configurations illustrated in FIG. 2A and FIG. 2B. That is, the power reception system 9 and the edge device 10-1 are connected to each other via a cable, and the control system 100 includes the cloud server 50. Further, the edge devices 10-1 and 10-2 can wirelessly communicate with each other. Accordingly, the following communication can be performed.
(1) The edge device 10-1 transmits the power consumption information or the information based on the power consumption information acquired from the power reception system 9 to the cloud server 50, and the cloud server 50 transmits the power consumption information or the information based on the power consumption information to the edge device 10-2.
(2) The edge device 10-1 transmits the power consumption information or the information based on the power consumption information acquired from the power reception system 9 to the edge device 10-2 via wireless communication without the intervention of the cloud server 50.

According to such a configuration, the edge device 10-1 can transmit the power consumption information or the information based on the power consumption information to the edge device 10-2 via the cloud server 50, and can also transmit the power consumption information or the information based on the power consumption information to the edge device 10-2 without the intervention of the cloud server 50. For example, the edge device 10-1 may selectively use the following two types of communication.
A. The edge device 10-1 is assumed to place priority on the communication with the cloud server 50, similar to the first embodiment. In the case where the edge device 10-1 receives from the cloud server 50 the information indicating that the communication with the edge device 10-2 is interrupted, the inter-device communication unit 19 of the edge device 10-1 transmits the power consumption information or the information based on the power consumption information to the edge device 10-2.
B. The edge device 10-1 is assumed to place priority on the communication with the cloud server 50, similar to the first embodiment. In the case where the edge device 10-1 receives from the edge device 10-2 the information indicating that the communication with the cloud server 50 is interrupted, the inter-device communication unit 19 of the edge device 10-1 transmits the power consumption information or the information based on the power consumption information to the edge device 10-2.
C. The edge device 10-1 is assumed to place priority on the direct communication between the edge devices 10, similar to the second embodiment. In the case where the edge device 10-1 detects the interruption of the communication with the edge device 10-2, the edge device 10-1 transmits the power consumption information or the information based on the power consumption information to the cloud server 50.
D. When the communication unit 14 of the edge device 10-1 transmits the power consumption information or the information based on the power consumption information to the cloud server 50, the inter-device communication unit 19 also always transmits the power consumption information or the information based on the power consumption information to the edge device 10-2. In this case, the edge device 10-2 receives the same power consumption information or the same information based on the power consumption information via two systems within a certain time, and may thus use the information received via one of the two systems. Alternatively, the edge device 10-1 adds an ID to the power consumption information or the information based on the power consumption information, and the edge device 10-2 discards the power consumption information or the information based on the power consumption information added with the same ID but received later.

### <Main Effects>

According to the present embodiment, the edge device 10-2 can acquire the power consumption information or the information based on the power consumption information as long as the communication with both the edge device 10-1 and the cloud server 50 is not interrupted.

### <Other Application Examples>

Although the best mode for carrying out the present disclosure is described above using the embodiments, the present disclosure is not particularly limited to these embodiments, and various modifications and substitutions can be made without departing from the subject matter of the present disclosure.

For example, the configuration example of FIG. 6 or the like is divided into blocks according to main functions, in order to facilitate the understanding of the processes performed by the edge device 10 and the cloud server 50. The technique of the present disclosure is not limited by the manner in which the processing units are divided into or by the names of the processing units. The processes of the edge device 10 and the cloud server 50 may be divided into further processing units according to the processing contents. Moreover, the processes may be divided such that one processing unit includes more processes.

In addition, a device group described in the embodiments merely represents one of a plurality of computing environments for implementing the embodiments disclosed herein. In some embodiments, the cloud server 50 includes a plurality of computing devices, such as a server cluster. The plurality of computing devices are configured to communicate with one another via an arbitrary type of communication link, including a network, a shared memory, or the like, and perform the processes disclosed herein.

Each function of the present disclosure described above can be implemented not only by software processing through execution of one or more programs, but also by one or a plurality of processing circuits. The "processing circuit" in the present specification includes a processor programmed to execute each function by software, such as a processor implemented by an electronic circuit, and a device such as an application specific integrated circuit (ASIC), a digital signal processor (DSP), a field programmable gate array (FPGA), a conventional circuit module, or the like designed to perform each function described above.

### <Reasons why Effects Occur>

·The first aspect of the present disclosure includes "a first control device configured to communicate with a power reception system via a cable", and "the first control unit acquires power consumption information of the device from the power reception system, and the first control unit reduces an air conditioning capacity of the air conditioner in a case where the first control unit transmits the power consumption information or information based on the power consumption information to the one or more second control devices", and thus, the first control unit can positively receive the power consumption information or the information based on the power consumption information with priority, and a plurality of control devices can acquire the information for more positively performing the demand control.
·The second aspect of the present disclosure includes "the first control unit that determines a demand level, a difference between demand levels, or a margin with respect to a target amount of power consumption based on the power consumption information", and transmits such information to the one or more second control devices, and thus, the one or more second control devices can share the demand level, the difference between the demand levels, or the margin with respect to the target amount of power consumption with the first control device without determining such information.
·The third aspect of the present disclosure includes "the first control unit that transmits the power consumption information to the one or more second control devices", and "the second control unit determines a demand level, a difference between demand levels, or a margin with respect to a target amount of power consumption of the second control unit based on the power consumption information, and thus, the second control unit can determine the demand level, the difference between the demand levels, or the margin with respect to the target amount of power consumption using existing functions.
·The fourth aspect of the present disclosure includes "the second control unit, in a case where a communication with the first control device is interrupted, that determines a demand level of the power supply, a difference between demand levels, or a margin with respect to a target amount of power consumption of the second control unit based on information acquired before the communication interrupted or information acquirable after the communication is interrupted", and thus, the one or more second control devices can perform the demand control even if the communication were to become interrupted.
·The fifth aspect of the present disclosure includes "the first control unit that transmits the power consumption information or the information based on the power consumption information to the one or more second control devices via the server device", and thus, it is possible to more positively transmit the power consumption information or the information based on the power consumption information to the one or more second control devices compared to a case without the intervention of the server device.
·The sixth aspect of the present disclosure includes "the server device" that "determines the second control device belonging to the same control group as the first control device that transmitted the power consumption information or the information based on the power consumption information, and transmits the power consumption information or the information based on the power consumption information to the second control device belonging to the same control group as the first control device", and thus, the server device can transmit the power consumption information or the information based on the power consumption information to the second control device belonging to the same control group, such as the same facility or the like, as the first control device.
·The seventh aspect of the present disclosure includes "the first control unit" that "determines the second control device belonging to the same control group as the first control device, and the first control unit, when transmitting the power consumption information or the information based on the power consumption information to the server device, instructs the server device of the second control device belonging to the same control group as the first control device, as a transmission destination of the power consumption information or the information based on the power consumption information", and thus, it is possible to transmit the power consumption information or the information based on the power consumption information to the second control device belonging to the same control group, such as the same facility, as the first control device.
·The eighth aspect of the present disclosure includes "the one or more second control devices" that "determine, in a case where a communication with the server device is interrupted, a demand level, a difference between demand levels, or a margin with respect to a target amount of power consumption of the one or more second control devices based on information acquired before communication is interrupted or information acquirable after the communication is interrupted, and thus, the one or more second control devices can perform the demand control even if the communication with the server device were interrupted.
·The ninth aspect of the present disclosure includes "the second control unit that determines, in a case where a communication with the server device is interrupted, whether or not a demand control is required, based on information acquired before the communication is interrupted or information acquirable after the communication is interrupted", and thus, the one or more second control devices can perform the demand control only when required, even in a case where the communication with the server device is interrupted.
·The tenth aspect of the present disclosure includes "the one or more second control devices" that "perform a demand control at a maximum demand level, in a case where a communication with the server device is determined as being disconnected", and thus, it is possible to more positively reduce the power consumption in the case where the communication with the server device is interrupted.

This application is based upon and claims priority to Japanese Patent Application No. 2024-072988 filed with the Japan Patent Office on April 26, 2024, and the entire contents of which are incorporated herein by reference.

### DESCRIPTION OF REFERENCE NUMERALS

10: Edge device
50: Cloud server

## Claims

1. A control system comprising a first control device configured to communicate with a power reception system via a cable, and one or more second control devices coupled to a device that consumes electric power, wherein:
the first control device includes a first control unit,
the first control unit acquires power consumption information of the device from the power reception system, and
the first control unit transmits the power consumption information or information based on the power consumption information to the one or more second control devices.

2. The control system as claimed in claim 1, wherein the first control unit
determines a demand level, a difference between demand levels, or a margin with respect to a target amount of power consumption based on the power consumption information, and
transmits the demand level, the difference between the demand levels, or the margin with respect to the target amount of power consumption to the one or more second control devices, as the information based on the power consumption information.

3. The control system as claimed in claim 1, wherein
the first control unit transmits the power consumption information to the one or more second control devices,
the one or more second control devices include a second control unit, and
the second control unit determines a demand level, a difference between demand levels, or a margin with respect to a target amount of power consumption of the second control unit based on the power consumption information.

4. The control system as claimed in claim 1 or 2, wherein
the one or more second control devices include a second control unit, and
the second control unit, in a case where a communication with the first control device is interrupted, determines a demand level of the power supply, a difference between demand levels, or a margin with respect to a target amount of power consumption of the second control unit based on information acquired before the communication interrupted or information acquirable after the communication is interrupted.

5. The control system as claimed in claim 1, wherein
the control system includes a server device, and
the first control unit transmits the power consumption information or the information based on the power consumption information to the one or more second control devices via the server device.

6. The control system as claimed in claim 5, wherein
the server device includes a third control unit, and
the third control unit
determines the second control device belonging to the same control group as the first control device that transmitted the power consumption information or the information based on the power consumption information, based on information related to a control device registered in advance in the server device, and
transmits the power consumption information or the information based on the power consumption information to the second control device belonging to the same control group as the first control device.

7. The control system as claimed in claim 5, wherein
the first control unit determines the second control device belonging to the same control group as the first control device, based on information related to a control device registered in advance in the first control device, and
the first control unit, when transmitting the power consumption information or the information based on the power consumption information to the server device, instructs the server device of the second control device belonging to the same control group as the first control device, as a transmission destination of the power consumption information or the information based on the power consumption information.

8. The control system as claimed in any one of claims 5 to 7, wherein
the one or more second control devices include a second control unit, and
the second control unit, in a case where a communication with the server device is interrupted, determines a demand level, a difference between demand levels, or a margin with respect to a target amount of power consumption of the second control unit based on information acquired before communication is interrupted or information acquirable after the communication is interrupted.

9. The control system as claimed in claim 8, wherein the second control unit
determines, in a case where a communication with the server device is interrupted, whether or not a demand control is required, based on information acquired before the communication is interrupted or information acquirable after the communication is interrupted, and
determines, in a case where the demand control is determined as being required, a demand level, a difference between demand levels, or a margin with respect to a target amount of power consumption of the second control unit based on the information acquired before the communication is interrupted or the information acquirable after the communication is interrupted.

10. The control system as claimed in any one of claims 5 to 7, wherein
the one or more second control devices include a second control unit, and
the second control unit performs a demand control at a maximum demand level, in a case where a communication with the server device is determined as being disconnected.

11. A control device configured to communicate with a power reception system via a cable, comprising:
a first control unit, wherein
the first control unit is configured to communicate with one or more second control devices coupled to a device that consumes electric power,
the first control unit acquires power consumption information of the device from the power reception system, and
the first control unit transmits the power consumption information or information based on the power consumption information to the one or more second control devices.

12. A control method to be implemented by a control system including a first control device configured to communicate with a power reception system via a cable, and one or more second control devices coupled to a device that consumes electric power, the control method comprising:
a process of acquiring, by a first control unit included in the first control device, power consumption information of the device from the power reception system; and
a process of transmitting, by the first control unit, the power consumption information or information based on the power consumption information to the one or more second control devices.
